# EUROPEAN PATENT APPLICATION

(11) **EP 2 514 968 A1**
(43) Date of publication of application: **24.10.2012**
(21) Application number: 10837424.0
(22) Date of filing: 29.11.2010
(51) Int. Cl.: F03D 11/00

(54) **WIND POWERED GENERATOR**

(30) Priority: 16.12.2009 JP 2009285537
(71) Applicant: Mitsubishi Heavy Industries, Ltd., Tokyo 108-8215 (JP)
(72) Inventor: SATO Shinsuke, Tokyo 108-8215 (JP); HIRAI Shigeto, Tokyo 108-8215 (JP); OKANO Yasushi, Tokyo 108-8215 (JP); NAKAMURA Taisuke, Tokyo 108-8215 (JP); MATSUO Takeshi, Tokyo 108-8215 (JP)
(74) Representative: Intès, Didier Gérard André
(86) International application number: PCT/JP2010/071219
(87) International publication number: WO 2011/074395

(57) **Abstract**

A wind turbine generator includes: a rotor hub configured to be provided inside a rotor head and contain apparatuses; a hatch configured to be provided in a front of the rotor hub; and a heat exchanger configured to be provided in an opening of the hatch. The heat exchanger includes: a partition portion configured to be put on the opening, and heat exchanging members configured to be provided so as to penetrate the partition portion, a side of one end being located inside the rotor hub and a side of the other end being located outside the rotor hub.

## Description

### TECHNICAL FIELD

The present invention relates to a wind turbine generator. More particularly, the present invention relates to a wind turbine generator having a cooling apparatus.

### BACKGROUND ART

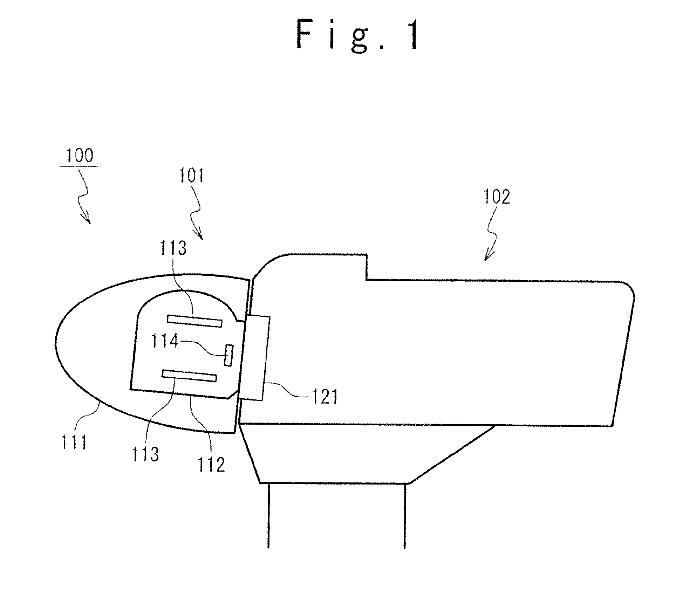

A wind turbine generator is known, which transforms wind power to electricity. Fig. 1 is a schematic view showing a typical wind turbine generator. The wind turbine generator 100 includes: a rotor head 101 provided with wind turbine blades and rotating; and a nacelle 102 containing a power generator. The rotor head 101 includes: a rotor head cover 111; a rotor hub 112 (rotor head casting) inside the rotor head cover 111; hydraulic pitch cylinders 113 inside the rotor hub 112; and a HUB control board 114. The nacelle 102 includes a main bearing 121. The inside of the rotor head 101 provided with the wind turbine blades and rotating becomes high temperature, because heat comes from the main bearing 121 of the nacelle 102 and the hydraulic pitch cylinders 113 and the HUB control board 114 produce heat. Therefore, it is necessary to cool the inside of the rotor head 101, especially the inside of the rotor hub 112.

As a related technique, the technique of the ventilation arrangement is disclosed in the U.S. patent publication US2009/0060748A1. This ventilation arrangement for a wind turbine includes: an air inlet opening located in a nose cone of the wind turbine; and a manhole cover for covering a manhole of a rotor hub of the wind turbine. The manhole cover provides: a vent opening for venting hot air from an internal space of the rotor hub; and a flexible piping establishing fluid communication between the internal space of the rotor hub and the air inlet opening. In this technique, the internal space of the rotor hub (rotor hub 112 in Fig. 1) is cooled by introducing air from the outside through the air inlet opening located in the nose cone.

As described above, in the wind turbine generator, it is necessary to cool the inside of the rotor hub 112. However, the inventors have now discovered that the cooling is difficult due to the following reasons.

First, inside the rotor head 101, especially inside the rotor hub 112, precision apparatuses such as the HUB control board 114 and the hydraulic pitch cylinders 113 are arranged. There may be a case that these apparatuses break down or erode due to moisture. In in order to prevent such breakdown and erosion, it is necessary to maintain humidity of the inside of the rotor hub 112 at a value equal to or less than a predetermined value. That is, the rotor hub 112 is required to have air-tightness. Therefore, it is difficult to cool the inside of the rotor hub by introducing air from the outside.

In addition, the rotor head 101 (rotor hub 112) rotates. Therefore, if a cooling apparatus is arranged in the rotor hub 112, the cooling apparatus is required to be independent from apparatuses inside the still nacelle 102. That is, since the cooling apparatus cannot be supplied with electric power from the nacelle 102, electric power capacity for the cooling apparatus is limited.

In the above technique in US2009/0060748A1, the apparatus in the internal space of the rotor hub (rotor hub 112) is affected by the humidity of external air. Therefore, there may be a case that the apparatus in the internal space of the rotor hub breaks down or erodes due to moisture. Consequently, it is not preferable to use this technique. It may be possible to additionally use a dehumidification apparatus for using this technique. However, it is difficult to deal with this method because of the problem of the electric power capacity limitation.

### CITATION LIST

### Patent Literature

**[PTL 1]** US2009/0060748A1

### SUMMARY OF INVENTION

An object of the present invention is to provide a wind turbine generator which can cool an inside of a rotor head (rotor hub) without affecting air-tightness of the rotor head (rotor hub). Another object of the present invention is to provide a wind turbine generator which can cool an inside of a rotor head (rotor hub) even if there is an electric power capacity limitation for an apparatus used in the inside of the rotor head (rotor hub).

A wind turbine generator of the present invention includes: a rotor hub configured to be provided inside a rotor head and contain apparatuses; and a hatch configured to be provided in a front of the rotor hub; and a heat exchanger configured to be provided in an opening of the hatch. The heat exchanger includes: a partition portion configured to be put on the opening, and heat exchanging members configured to be provided so as to penetrate the partition portion, a side of one end of each of the heat exchanging members being located inside the rotor hub and a side of the other end of the each of the heat exchanging members being located outside the rotor hub.

In the above wind turbine generator, the heat exchanger preferably may further include: a first fan configured to be provided so as to blow gas inside the rotor hub to the side of the one end of the each of the heat exchanging members, and a second fan configured to be provided so as to blow gas outside the rotor hub to the side of the other end of the each of the heat exchanging members.

In the above wind turbine generator, the each of the heat exchanging members may preferably include a heat pipe. A direction of a center axis of the heat pipe may be preferably parallel to a direction of a rotation axis of the rotor head.

In the above wind turbine generator, the heat exchanging members may preferably include a plurality of heat pipes including the heat pipe. The plurality of heat pipes may be preferably arranged so as to be rotationally symmetric with respect to the rotation axis of the rotor head.

In the above wind turbine generator, the each of the heat exchanging members may preferably include a fin made of heat conductive material.

In the above wind turbine generator, the heat exchanging members may preferably include a plurality of fins including the fin. The plurality of fins may be preferably arranged so as to be rotationally symmetric with respect to the rotation axis of the rotor head.

The above wind turbine generator may preferably include a plurality of heat exchangers. The plurality of heat exchanges may be provided in a side surface of the rotor hub in addition to the opening.

According to the present invention, a wind turbine generator which can cool an inside of a rotor head (rotor hub) can be provided without affecting air-tightness of the rotor head (rotor hub). In addition, a wind turbine generator which can cool an inside of a rotor head (rotor hub) can be provided even if there is an electric power capacity limitation for an apparatus used in the inside of the rotor head (rotor hub).

### BRIEF DESCRIPTION OF DRAWINGS

Fig. 1 is a schematic view showing a typical wind turbine generator;
Fig. 2 is a schematic view showing a structure of a wind turbine generator according to the first embodiment of the present invention;
Fig. 3 is a schematic view showing a structure of a heat exchanger according to the first embodiment of the present invention;
Fig. 4 is a schematic view showing a heat exchanger according to the first embodiment of the present invention;
Fig. 5A is a schematic view showing an example of an arrangement of heat pipes;
Fig. 5B is a schematic view showing an example of an arrangement of heat pipes;
Fig. 5C is a schematic view showing an example of an arrangement of heat pipes;
Fig. 6 is a schematic view showing a structure of a wind turbine generator according to the second embodiment of the present invention;
Fig. 7 is a schematic view showing a structure of a heat exchanger according to the second embodiment of the present invention; and
Fig. 8 is a schematic view showing an example of an arrangement of heat exchanging fins 43.

### DESCRIPTION OF EMBODIMENTS

Embodiments of a wind turbine generator of the present invention will be described below referring to the accompanying drawings.

### (First embodiment)

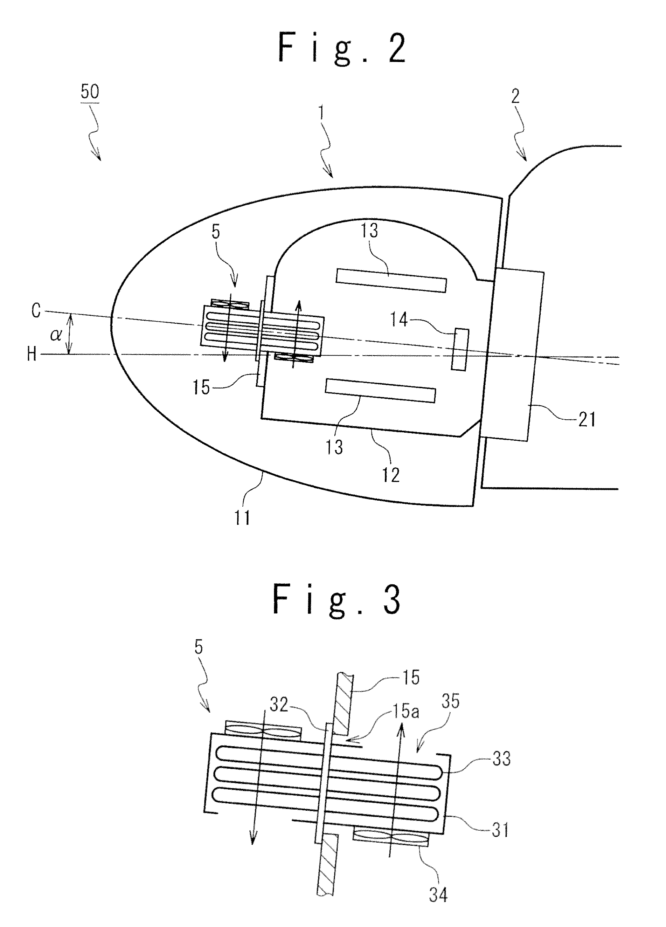

A wind turbine generator according to the first embodiment of the present invention will be described referring to the accompanying drawings. Fig. 2 is a schematic view showing a structure of the wind turbine generator according to the first embodiment of the present invention. The wind turbine generator 50 includes: a rotor head 1 provided with wind turbine blades and rotating; a nacelle 2 containing a power generator; and a heat exchanger 5. The rotor head 1 includes: a rotor head cover 11; a rotor hub 12 (rotor head casting) inside the rotor head cover 11; hydraulic pitch cylinders 13 inside the rotor hub 12 ; a HUB control board 14 ; and a front hatch 15 provided in the front portion of the rotor hub 12. The heat exchanger 5 is a heat exchanger using a heat pipe method. The heat exchanger 5 is provided so as to penetrate the front hatch 15, wherein one side of the heat exchanger 5 is located inside the rotor hub 12 and the other side of the heat exchanger 5 is located outside the rotor hub 12.

Inside the rotor hub 12, as described above, the humidity is maintained at a value equal to or less than a predetermined value in order to prevent precision apparatuses such as the HUB control board 14 and the hydraulic pitch cylinders 13 from breaking down or eroding due to moisture. Thatis, the rotor hub 12 has air-tightness. Corresponding to this, the heat exchanger 5, which penetrates the front hatch 15, has a structure that gas (moisture) cannot pass between the inside and the outside of the rotor hub 12.

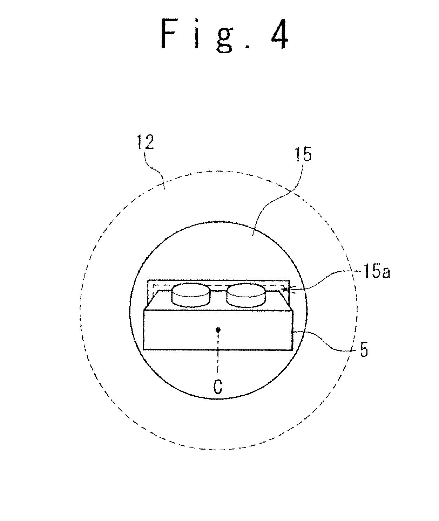

Figs. 3 and 4 are schematic views showing a structure of the heat exchanger of the wind turbine generator according to the first embodiment of the present invention. The heat exchanger 5 includes: a housing 31, a partition plate 32, heat pipes 33 and fans 34.

The housing 31 houses the heat pipes 33 inside the housing 31, holds the partition plate 32 at a middle portion of the housing 31, and supports the fans 34 at side portions of the housing 31. The housing 31 has, for example, a cuboid shape. However, the present invention is not limited to the example. For example, if the housing 31 has a cylindrical shape, by arranging the housing 31 such that an axis of the cylinder overlaps with a rotation axis (main axis of the windmill) of the rotor head 1, the decrease of the rotation efficiency of the windmill caused by arranging the heat exchanger 5 can be dramatically suppressed.

The partition plate 32 is provided at the middle portion of the housing 31 so as to divide a space inside the housing 31 into two portions. That is, the partition plate 32 divides the space inside the housing 31 into the portion inside the rotor hub 12 and the portion outside the rotor hub 12. The partition plate 32 spreads to outside the housing 31. When the heat exchanger 5 is inserted into a hole 15a of the front hatch 15 so as to penetrate the front hatch 15, the portion spread outside the housing 31 closes the hole 15a. Consequently, the rotor hub 12 can be hermetically-sealed even though the heat exchanger 5 penetrates the front hatch 15.

The heat pipes 33 (heat exchanging members), each having an approximately cylindrical shape, are provided so as to penetrate the partition plate 32. A side of one end of the heat pipe 33 is located inside the rotor hub 12 and a side of the other end of the heat pipe 33 is located outside the rotor hub 12 across the partition plate 42. However, the partition plate 32 does not exist in the heat pipes 33. A direction of a center axis of the heat pipe 33 (which is a longitudinal direction of the heat pipe 33) is preferably parallel to a direction of the rotation axis C (main axis of the windmill) of the rotor head 1. The heat pipes 33 are plural. The plurality of heat pipes 33 is preferably arranged so as to be axially; asymmetric (rotationally symmetric) with respect to the rotation axis C of the rotor head 1. This is because the eccentricity and vibration of the windmill can be prevented and the decrease of the rotation efficiency of the windmill can be drastically suppressed.

As a working fluid of the heat pipe 33, an antifreeze fluid is preferable. This can prevent the heat pipe 33 from being damaged by freezing the working fluid in the low atmospheric temperature. As the antifreeze fluid, ethylene glycol is exemplified.

The fans 34 are provided at the side portions of the housing 31, outside and inside the rotor hub 12. The fans 34, which are located at the side portion inside the rotor hub 12, are provided so as to blow gas inside the rotor hub 12 to the side of the one end of each heat pipe 33. The fans 34, which are located at the side portion outsize the rotor hub 12, are provided so as to blow gas outside the rotor hub 12 to the side of the other end of each heat pipe 33. These facilitate the heat exchange by the heat pipes 33 and improve the efficiency of the heat exchange. In the example of the drawings, the fans 34 are provided at the single side portion of the housing 31 inside or outside the rotor hub 12. However, the present invention is not limited to this example. Other fans 34 may be further provided at other side portions of the housing 31. Since the fans 34 consume much less electric power, the fans 34 can be sufficiently operated by using electric power only inside the rotor head 1.

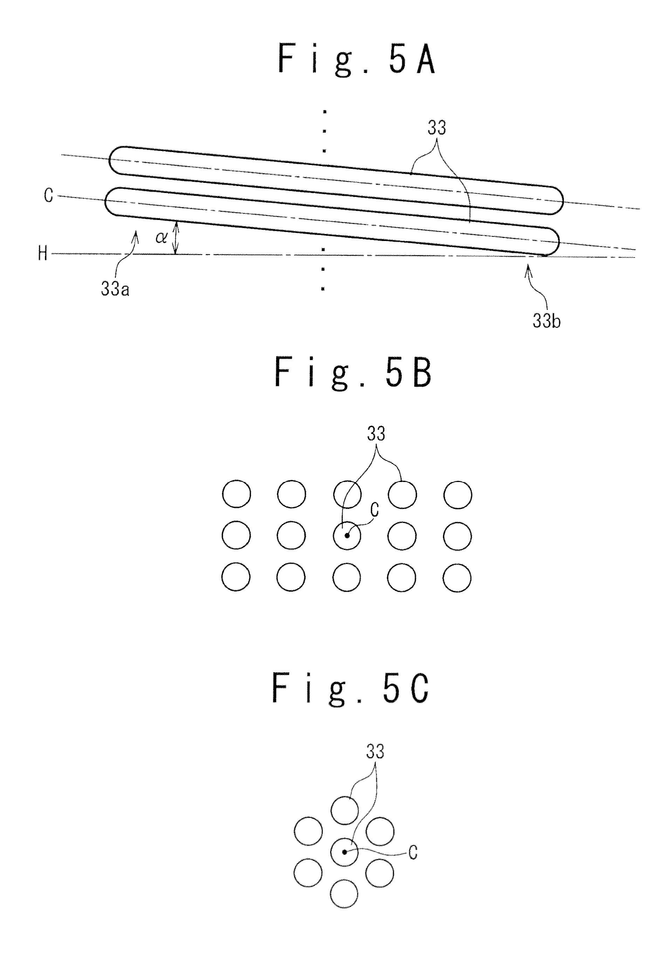

Figs. 5A to 5B are schematic views showing an example of the arrangement of the heat pipes 33. As shown in Fig. 5A, the heat pipes 33 are preferably arranged such that the center axes are parallel to the rotation axis C (main axis of the windmill) of the rotor head 1. Since the main axis of the windmill is tilted from the horizontal at a tilt angle α, the heat pipes 33 are also tilted. That is, with respect to the gravity direction, an upper region 33a and a lower region 33b can be provided in each heat pipe 33. Here, the upper region 33a is located outside the rotor hub 12 and has contact with low temperature gas. On the other hand, the lower region 33b is located inside the rotor hub 12 and has contact with high temperature gas. That is, inside each heat pipe 33, in the lower region 33b, the working fluid of the liquid phase is heated by the high temperature gas inside the rotor hub 12. As a result, the working fluid is evaporated to be in the gas phase. At that time, the working fluid takes heat from the high temperature gas to lower the temperature of the gas. On the other hand, the working fluid of the gas phase moves toward the upper region 33a. In the upper region 33a, the working fluid of the gas phase is cooled by the low temperature gas outside the rotor hub 12. As a result, the working fluid is condensed to be in the liquid phase. At that time, the working fluid releases heat to the low temperature gas to heat the temperature of the gas. On the other hand, the working fluid of the liquid phase moves toward the lower region 33b. Then, the process proceeds with the similar manner. That is, the upper region 33a can function as a condensation section (heat output section) of the heat pipe, and the lower region 33b can function as an evaporation section (heat input section) of the heat pipe.

At this time, by the rotation of the windmill, centrifugal force in a direction perpendicular to the rotation axis C is applied to the working fluid of the heat pipe 33. However, force in a direction parallel to the rotation axis C (longitudinal direction of the heat pipe 33) is not substantially applied to the working fluid. That is, the move of the working fluid is not affected by the centrifugal force, thereby having no effect on the function of the heat pipe 33. In this way, when the center axis of the heat pipe 33 is parallel to the main axis of the windmill (center axis C of the rotor head 1), the heat pipe 33 can fulfill its function with high efficiency. Incidentally, if the center axis of the heat pipe 33 is not parallel to the main axis of the windmill, the centrifugal force is applied in the longitudinal direction of the heat pipe 33. Therefore, the move of the working fluid is affected by the centrifugal force. Consequently, the efficiency of the heat pipe 33 is considered to be decreased depending on the tilt of the center axis of the heat pipe 33 with respect to the main axis of the windmill.

The plurality of heat pipes 33 is arranged so as to be rotationally symmetric centering around the rotation axis C. Accordingly, in the rotation of the windmill, the decrease of the rotation efficiency caused by arranging the heat exchanger 5 can be dramatically suppressed. For example, when the housing 31 has the cuboid shape, the plurality of heat pipes 33 is arranged as the 2-fold rotational symmetry (dyad) as shown in Fig. 5B. When the housing 31 has the cylindrical shape, the plurality of heat pipes 33 is arranged as the 6-fold rotational symmetry (hexad) as shown in Fig. 5C.

Incidentally, not only a single heat exchanger 5 but also a plurality of heat exchangers 5 may be arranged in the front hatch 15. In this case, the plurality of heat exchangers 5 is further arranged at positions so as to be rotational symmetric around the main axis of the windmill.

In the present embodiment, the heat pipes 33 are arranged, which extend from the inside to the outside the sealed chamber composed of the rotor hub 12 and the front hatch 15. Therefore, when the temperature inside the sealed chamber is high and the temperature outside of the sealed chamber is low, the heat pipes 33 can release the heat accumulated inside the sealed chamber to the outside. The heat pipes 33 are provided so as to penetrate the wall of the sealed chamber, and gas cannot enter or leave the sealed chamber through the penetration portion. Therefore, the temperature inside the sealed chamber can be maintained to be low while the air-tightness of the sealed chamber is maintained to be high.

In addition, since the fans 34 facilitating the heat exchange by the heat pipes 33 are power saving devices, the fans 34 can be sufficiently operated by using the electric power available inside the rotor head 1. Further, since the heat exchanger 5 including the heat pipes 33 is arranged at the front hatch 15, the decrease of the rotation efficiency of the windmill due to the eccentricity can be prevented. Preferably, the center axis of each heat pipe 33 is approximately parallel to the main axis of the windmill. Since the working fluid is not prevented from moving, the heat pipe 33 can fulfill its function with high efficiency.

### (Second embodiment)

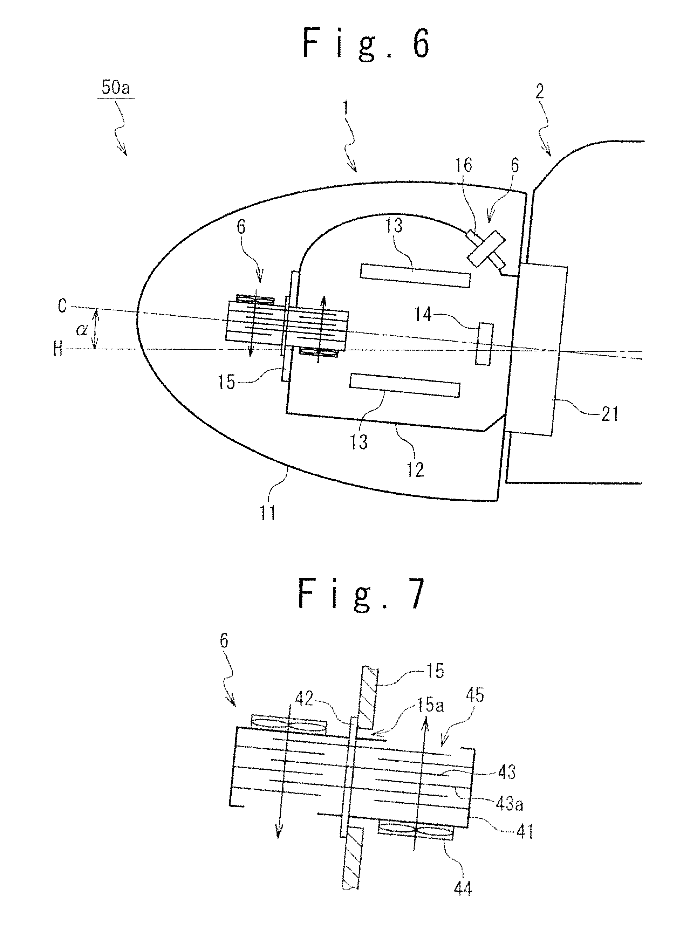

A wind turbine generator according to the second embodiment of the present invention will be described referring to the accompanying drawings. Fig. 6 is a schematic view showing a structure of the wind turbine generator according to the second embodiment of the present invention. The wind turbine generator 50a includes: a rotor head 1 provided with wind turbine blades rotating; a nacelle 2 containing a power generator; and a heat exchanger 6.

In the present embodiment, the different point from the first embodiment is that not the heat exchanger 5 but the heat exchanger 6 is used as an apparatus for decreasing the temperature inside the rotor hub 12. The heat exchanger 6 is a heat exchanger using the air-to-air method. The heat exchanger 6 is provided so as to penetrate the front hatch 15, wherein one side of the heat exchanger 6 is located inside the rotor hub 12 and the other side of the heat exchanger 6 is located outside the rotor hub 12. The heat exchanger 6 may be provided not only at the front hatch 15 but also at a nacelle side manhole 16. This is because unlike a heat pipe, the heat exchanger 6 does not use a working fluid, thereby fulfilling its function without being affected by a location and an orientation of the arrangement. By performing the dispersive arrangement, the temperature inside the rotor hub 12 can be decreased more uniformly. Since the others are the same as those of the first embodiment, the descriptions thereon are omitted.

Fig. 7 is a schematic view showing a structure of the heat exchanger of the wind turbine generator according to the second embodiment of the present invention. The heat exchanger 6 includes: a housing 41, a partition plate 42, heat exchanging fins 43 and fans 44.

The housing 41 houses the heat exchanging fins 43 inside the housing 41, holds the partition plate 42 at a middle portion of the housing 41, and supports the fans 44 at side portions of the housing 41. The housing 41 has, for example, a cuboid shape. However, the present invention is not limited to the example. For example, if the housing 41 has a cylindrical shape, by arranging the housing 41 such that a center axis of the cylinder overlaps with a rotation axis (main axis of the windmill) C of the rotor head 1, the decrease of the rotation efficiency of the windmill caused by arranging the heat exchanger 6 can be dramatically suppressed.

The partition plate 42 is provided at the middle portion of the housing 41 so as to divide a space inside the housing 41 into two portions. That is, the partition plate 42 divides the space inside the housing 41 into the portion inside the rotor hub 12 and the portion outside the rotor hub 12. The partition plate 42 spreads to outside the housing 41. When the heat exchanger 6 is inserted into a hole 15a of the front hatch 15 so as to penetrate the front hatch 15, the portion spread outside the housing 31 closes the hole 15a. Consequently, the rotor hub 12 can be hermetically-sealed even though the heat exchanger 6 penetrates the front hatch 15.

The heat exchanging fins 43 (heat exchanging members), each being made of thermal conductive material (e.g., metal) and having a flat plate shape, are provided so as to penetrate the partition plate 42. A side of one end of the heat exchanging fin 43 is located inside the rotor hub 12 and a side of the other end of the heat exchanging fin 43 is located outside the rotor hub 12 across the partition plate 42. Here, the housing 41 may further include other heat exchanging fins 43a, each extending between the two adjacent heat exchanging fins 43 from the inner wall of the housing 41. Consequently, the fans 44 can make air have contact with the heat exchanging fins 43 effectively. A direction parallel to the plane of the heat exchanging fin 43 (which is a longitudinal direction of the heat exchanging fin 43) is preferably parallel to the direction of the rotation axis C of the rotor head 1. The heat exchanging fins 43 are plural, The plurality of heat exchanging fins 43 is preferably arranged so as to be axially symmetric (rotationally symmetric) with respect to the rotation axis C of the rotor head 1. This is because the eccentricity and ilibration of the windmill can be prevented and the decrease of the rotation efficiency of the windmill can be drastically suppressed.

The fans 44 are provided at the side portions of the housing 41, outside and inside the rotor hub 12. The fans 44, which are located at the side portion inside the rotor hub 12, are provided so as to blow gas inside the rotor hub 12 to the side of the one end of each heat exchanging fins 43. The fans 44, which are located at the side portion outside the rotor hub 12, are provided so as to blow gas outside the rotor hub 12 to the side of the other end of each heat exchanging fins 43. These facilitate the heat exchange by the heat exchanging fins 43 and improve the efficiency of the heat exchanger. In the example of the drawing, the fans 44 are provided at the single side portion of the housing 41 inside or outside the rotor hub 12. However, the present invention is not limited to this example. Other fans 44 may be further provided at other side portions of the housing 41. Since the fans 44 consume much less electric power, the fans 44 can be sufficiently operated buy using electric power only inside the rotor head 1 .

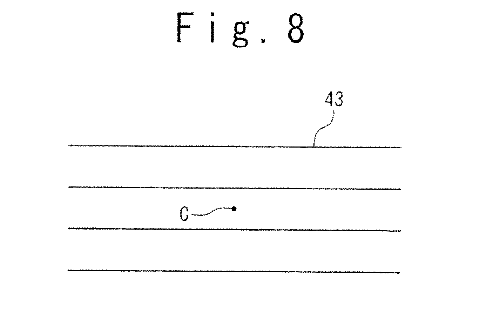

Fag. 8 is a schematic view showing an example of the arrangement of the heat exchanging fins 43. As shown in Fig. 8, the plurality of heat exchanging fins 43 is arranged so as to be rotationally symmetric centering around the rotation axis C. Accordingly, in the rotation of the windmill, the decrease of the rotation efficiency caused by arranging the heat exchanger 6 can be dramatically suppressed. For example, when the housing 41 has the cuboid shape, the plurality of heat exchanging fins 43 is arranged as the 2-fold rotational symmetry (dyad) as shown in Fig. 8.

In the present embodiment, the heat exchanging fins 43 are arranged, which extend from the inside to the outside of the sealed chamber composed of the rotor hub 12 and the front hatch 15. Therefore, when the temperature inside the sealed chamber is high and the temperature outside the sealed chamber is low, the heat exchanging fins 43 can release the heat accumulated inside the sealed chamber to the outside. The heat exchanging fins 43 are provided so as to penetrate the wall of the sealed chamber, and gas cannot enter or leave the sealed chamber through the penetration portion. Therefore, the temperature inside the sealed chamber can be maintained to be low while the air-tightness of the sealed chamber is maintained to be high.

In addition, since the fans 34 facilitating the heat exchange by the heat exchanging fins 43 are power saving devices, the fans 34 can be sufficiently operated by using the electric power available inside the rotor head 1. Further, since the heat exchanger 6 including the heat exchanging fins 43 is arranged at the front hatch 15, the decrease of the rotation efficiency of the windmill due to the eccentricity can be presented.

According to the present invention, a wind turbine generator which can cool an inside of a rotor head (rotor hub) can be provided without effecting air-tightness of the rotor head (rotor hub). If addition, a wind turbine generator which can cool an inside of a rotor head (rotor hub) can be provided even if there is an electric power capacity limitation for an apparatus used in the inside of the rotor head (rotor hub) . The present invention shows remarkable effect when a wind turbine generator is used in the environment that frequent maintenance is difficult and influence of moisture (including salt waster) is significantly great, for example, in the situation that a wind turbine generator is set up on the sea.

It is apparent that the present invention is not limited to the above embodiment, but may be modified and changed without departing from the scope and spirit of the invention. In addition, the techniques described in each embodiment can be applied to other embodiments if no contradiction arises in the embodiments.

Although the present invention has been described above in connection with several exemplary embodiments thereof, it would be apparent to those skilled in the art that these exemplary embodiments provided solely for illustrating the present invention, and should not be relied upon to construe the appended claims in a limiting sense.

This application is based upon and claims the benefit of priority from Japanese patent application No. 2009-285537 filed on December 16, 2009, the disclosure of which is incorporated herein in its entirety by reference.

## Claims

1. A wind turbine generator comprising:
a rotor hub configured to be provided inside a rotor head and contain apparatuses;
a hatch configured to be provided in a front of said rotor hub; and
a heat exchanger configured to be provided in an opening, of said hatch,
wherein said heat exchanger includes:
a partition portion configured to be put on said opening, and
heat exchanging members configured to be provided so as to penetrate said partition portion, a side of one end of each of said heat exchanging members being located inside said rotor hub and a side of the other end of said each of said heat exchanging members being located outside said rotor hub.

2. The wind turbine generator according to claim 1, wherein said heat exchanger further includes:
a first fan configured to be provided so as to blow gas inside said rotor hub to said side of said one end of said each of said heat exchanging members, and
a second fan configured to be provided so as to blow gas outside said rotor hub to said side of the other end of said each of said heat exchanging members.

3. The wind turbine generator, according to claim 1 or 2, wherein said each of said heat exchanging members includes a heat pipe, and
wherein a direction of a center axis of said heat pipe is parallel to a direction of a rotation axis of said rotor head.

4. The wind turbine generator according to claim 3, wherein said heat exchanging members include a plurality of heat pipes including said heat pipe, and
wherein said plurality of heat pipes is arranged so as to be rotationally symmetric with respect to said rotation axis of said rotor head.

5. The wind turbine generator according to claim 1 or 2, wherein said each of said heat exchanging members includes a fin made of heat conductive material.

6. The wind turbine generator according to claim 5, wherein said heat exchanging members include a plurality of fins including said fin, and
wherein said plurality of fins is arranged so has to be rotationally symmetric with respect to said rotation axis of said rotor head.

7. The wind turbine generator according to claim 5 or 6, further comprising:
a plurality of heat exchangers including said heat exchanger,
wherein said plurality of heat exchangers is provided in a side surface of said rotor hub in addition to said opening.
